# EUROPEAN PATENT APPLICATION

(11) **EP 4 782 894 A1**
(43) Date of publication of application: **29.07.2026**
(21) Application number: 25172535.4
(22) Date of filing: 25.04.2025
(51) Int. Cl.: G02B 6/30, G02B 6/42

(54) **OPTICAL FIBER POSITIONING DEVICE**

(30) Priority: 22.01.2025 US 202519034134
(71) Applicant: GlobalFoundries U.S. Inc., Malta, NY 12020 (US)
(72) Inventor: CHO, Jae Kyu, Malta, NY, 12020 (US); ROBSON, Norman W., Hopewell Junction, NY, 12533 (US)
(74) Representative: Lambacher, Michael

(57) **Abstract**

The present disclosure relates to an optical fiber positioning device and, more particularly, to an optical fiber positioning device and a method for attaching a fiber optic array to a photonic integrated circuit (PIC). The structure includes: a body having a first end and a second end; a dome shaped indicator provided on the body; a first positioning mark associated with the dome shaped indicator; and a second positioning mark under the first positioning mark and associated with the dome shaped indicator.

## Description

### BACKGROUND

The present disclosure relates to an optical fiber positioning device and, more particularly, to an optical fiber positioning device and a method for attaching a fiber optic array to a photonic integrated circuit (PIC).

A photonic integrated circuit (PIC) is a microchip containing two or more photonic components. Examples of a PIC include monolithic tunable lasers, widely tunable lasers, externally modulated lasers and transmitters, integrated receivers, etc.. These technologies detect, generate, transport, and process light, and provide functions for information signals imposed on optical wavelengths typically in the visible spectrum or near-infrared.

A commercially utilized material platform for a PIC can be a semiconductor substrate such as indium phosphide (InP), which allows for the integration of various optically active and passive functions on the same chip. The alignment of a fiber optic array to the PIC is important to achieve high performance optical devices. For example, the fiber optic array needs to be aligned in the longitudinal, transversal and diagonal axes to ensure low insertion loss.

### SUMMARY

In an aspect of the disclosure, a structure comprises: a body comprising a first end and a second end; a dome shaped indicator provided on the body; a first positioning mark associated with the dome shaped indicator; and a second positioning mark under the first positioning mark and associated with the dome shaped indicator.
The body and the dome shaped indicator may comprise transparent material; the transparent material may comprise one of glass, plastic and polymer.
Further, the dome shaped indicator may comprise a convex surface. Further, the dome shaped indicator may be circular shaped or polygon shaped. Further, the dome shaped indicator may comprise a magnification.
Further, the first positioning mark may be larger than the second positioning mark; further the second positioning mark may be nested within confines of the first positioning mark. Still further, the first positioning mark and the second positioning mark may be concentric when a fiber optic array is in perfect parallelism during an assembly of the fiber optic array to a waveguide of a photonic integrated circuit.
The above structure may further comprise a second dome shaped indicator on a second end of the body and the dome shaped indicator on the first end of the body; the second dome shaped indicator may comprise the first positioning mark and the second positioning mark; the second positioning mark may be nested within confines of the first positioning mark.

In an aspect of the disclosure, a structure comprises: a body comprising a first end and a second end and composed of a transparent material; a first dome shaped indicator provided on the first end of the body; a second dome shaped indicator provided on a second end of the body; a first positioning mark associated with the first dome shaped indicator and the second dome shaped indicator; and a second positioning mark under the first positioning mark of the first and second dome shaped indicators, the second positioning mark being smaller than the first positioning mark.
The body and the dome shaped indicators may comprise a transparent material; further, the dome shaped indicators may each comprise a magnification; further, the second positioning mark may be nested within confines of the first positioning mark.
Further, the first positioning mark and the second positioning mark may be concentric when a fiber optic array is in perfect parallelism during an assembly of the fiber optic array to a waveguide of a photonic integrated circuit. Further, the first positioning mark and the second positioning mark may be misaligned when a fiber optic array is in not in perfect parallelism during an assembly of the fiber optic array to a waveguide of a photonic integrated circuit.

In an aspect of the disclosure, a photonics assembly comprises: a substrate comprising a plurality of grooves on an upper surface thereof; a fiber optical array comprising a plurality of fiber optics placed within the grooves located on the upper surface of the substrate; and an alignment tool over the plurality of fiber optics, the alignment tool comprising a body with a first dome shaped structure with upper and lower positioning marks and a second dome shaped structure with upper and lower positioning marks, the lower positioning marks being concentric with the upper position marks when the plurality of fiber optics are in alignment with a waveguide along six degrees of freedom.
The body, the first dome shaped structure and the second dome shaped structure may comprise transparent material. Further, the first dome shaped structure and the second dome shaped structure may comprise a magnification lens, with the lower positioning marks nested within the upper positioning marks.

### BRIEF DESCRIPTION OF THE DRAWINGS

The present disclosure is described in the detailed description which follows, in reference to the noted plurality of drawings by way of non-limiting examples of exemplary embodiments of the present disclosure.
FIG. 1A shows a top view of an optical fiber positioning device in accordance with aspects of the present disclosure.
FIG. 1B shows a side view of the optical fiber positioning device in accordance with aspects of the present disclosure.
FIG. 2 shows an exploded view of the optical fiber positioning device, a fiber optical array and a substrate in accordance with aspects of the present disclosure.
FIG. 3 shows an assembly of the optical fiber positioning device coupling the fiber optical array to the substrate in accordance with aspects of the present disclosure.
FIGS. 4-7D show positioning marks of the optical fiber positioning device representing different positions of the fiber optic array within grooves of the substrate in accordance with aspects of the present disclosure.

### DETAILED DESCRIPTION

The present disclosure relates to an optical fiber positioning device and, more particularly, to an optical fiber positioning device and a method for attaching a fiber optic array to a photonic integrated circuit (PIC). More specifically, the optical fiber positioning device comprises a transparent glass, plastic or a polymer coupon or lid which includes dome shape indicators at opposing ends (e.g., longitudinal ends). In embodiments, the dome shape indicators include fiducial marks which assist in achieving highly reliable parallelism between the fiber optic array and the waveguide in the PIC. For example, the dome shape indicators provide active feedback for parallelism between a multi-channel fiber array positioned within grooves (e.g., V-shape grooves of a PIC) and a waveguide of the PIC.

Advantageously, the optical fiber positioning device prevents longitudinal/transversal tilt of a fiber optic array in V-grooves of a PIC to ensure proper alignment to a waveguide structure, thereby resulting in low insertion loss. Additionally, the optical fiber positioning device is cost effective and makes it possible to provide quick adjustments allowing optimal fiber alignment in the V-grooves of the PIC. The optical fiber positioning device is also a flexible tool which can be used with both small and high count fiber optic arrays, and which is easily adopted within existing fiber attach tools (e.g., pick and place tool). Moreover, the active feedback of the optical fiber positioning device from each module prevents fiber attach assembly line excursions.

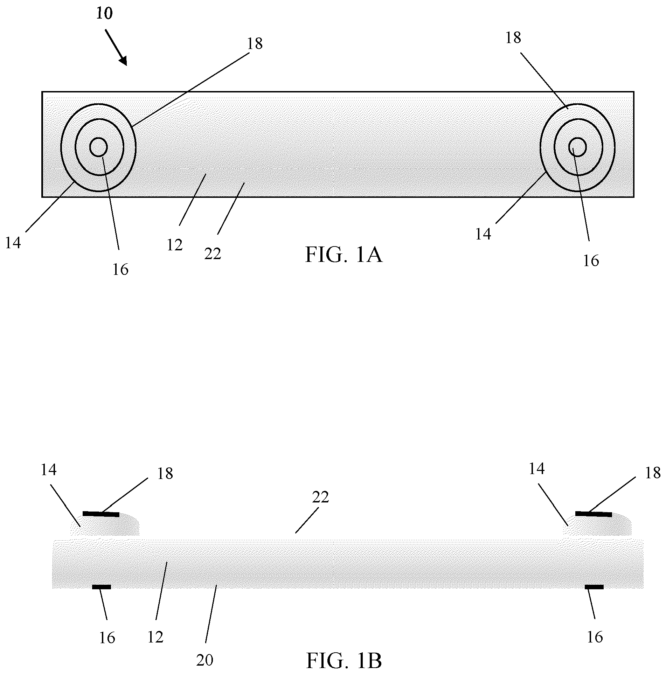

FIG. 1A shows a top view of an optical fiber positioning device and FIG. 1B shows a side view of the optical fiber positioning device in accordance with aspects of the present disclosure. More specifically and referring to FIGS. 1A and 1B, the optical fiber positioning device 10 may include a body (e.g., lid or coupon) 12 with one or more dome shape indicators 14. In more specific embodiments, the dome shape indicators 14 have a convex shape and may be provided at opposing ends (e.g., opposing longitudinal ends) of the body 12. In embodiments, the dome shape indicators 14 may comprise magnifying lenses configured to magnify alignment marks (e.g., fiducial marks) 16, 18 on the surfaces 20, 22 of the body 12.

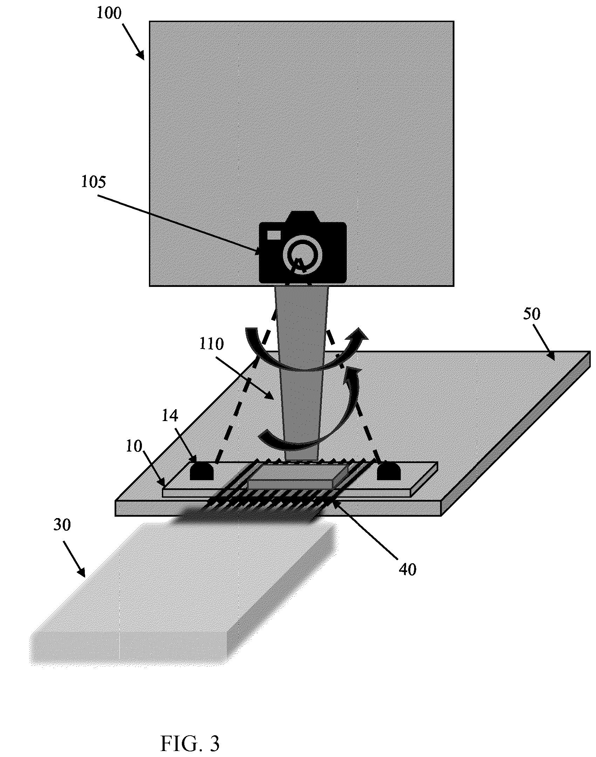

The body 12 may be composed of glass, plastic, polymer or other transparent materials. The transparent material allows an engineer or technician to visualize the positioning marks 16, 18, in addition to visualizing a fiber optic array positioned on a PIC during an assembly process. The body 12 of the optical fiber positioning device 10 may include a flat, planar bottom surface 20 and a flat, planar top surface 22. The flat, planar bottom surface 20 of the optical fiber positioning device 10 may sit flush on a top surface of a substrate, e.g., PIC, as shown in FIG. 3.

The dome shape indicators 14 may also be composed of glass, plastic, polymer or other appropriate transparent material. The transparent material allows an engineer or technician to visualize the positioning marks 16, 18 placed over and under the dome shape indicators 14 as described in more detail herein.

The dome shape indicators 14 may be circular with a convex surface (e.g., acting as a magnifying lens); although other shapes are contemplated herein. For example, the dome shape indicators 14 may be a polygon, e.g., rectangular, square, hexagonal, octagonal, etc. In any of these configurations, the dome shape indicators 14 are configured to provide magnification, e.g., enlarging objects seen through the dome shape indicators 14. For example, the dome shaped indicators 14 may comprise a magnifying lens which is capable of magnifying the positioning mark 16, e.g., fiducial mark, on the bottom surface 20 of the optical fiber positioning device 10. The dome shaped indicators 14 also allows visualization of the positioning marks 16, 18 at different relative locations with respect to one another based on a position, e.g., tilt, etc., of the optical fiber positioning device 10 and, hence, an alignment or misalignment of optic fibers on a PIC.

In further embodiments, the bottom surface 20 of the optical fiber positioning device 10 may include the positioning mark 16, e.g., fiducial mark, and a top surface 22 of the optical fiber positioning device 10 may include the positioning mark 18, e.g., fiducial mark. The positioning mark 18 may be positioned above the positioning mark 16, with the positioning marks 16, 18 being circles of the same or different colors; although other shapes are also contemplated herein. For example, in embodiments, the positioning marks 16, 18 may be other nested shapes, e.g., polygon such as rectangular, square, hexagonal, octagonal, etc.

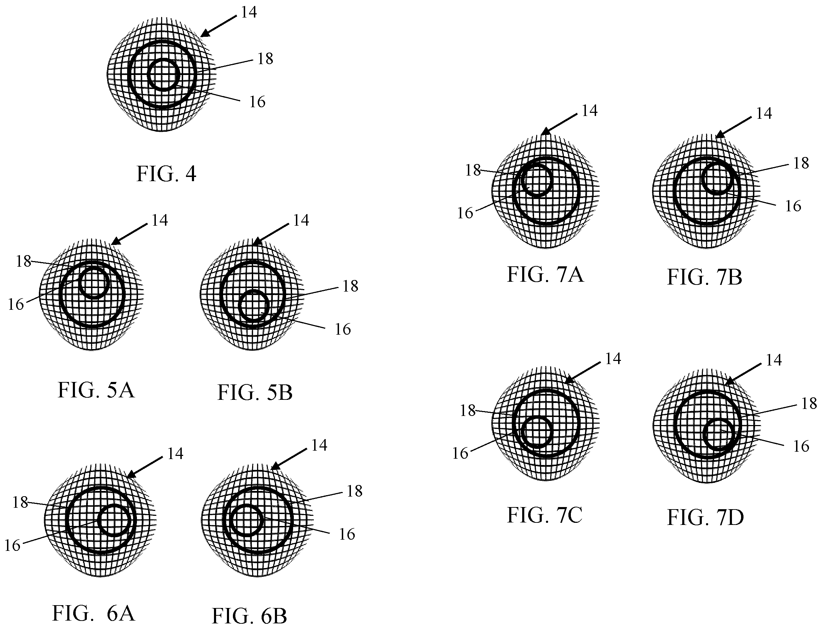

In embodiments, the positioning mark 16 may be smaller than the positioning mark 18, with the positioning mark 16 nested (e.g., from top view) within the confines of the positioning mark 18. As discussed further with respect to FIG. 4, the positioning marks 16, 18 are perfectly aligned, e.g., the positioning mark 16 is concentrically positioned within the positioning mark 18, when the fiber optic arrays are perfectly positioned, longitudinally, transversely and diagonally (e.g., within six degrees of freedom) within V-grooves of a substrate, e.g., board of a PIC. In contrast, as discussed further with respect to FIGS. 5A-7D, the positioning mark 16 is not concentrically positioned within the positioning mark 18, when the fiber optic arrays are not perfectly positioned, longitudinally, transversely and/or diagonally (e.g., within six degrees of freedom) within V-grooves of a substrate, e.g., board of a PIC. As should be understood by those of skill in the art, six degrees of freedom refers to a complete range of movement fiber optics in a fiber optic array can have in three-dimensional space, encompassing three translational motions (moving along X, Y, and Z axes) and three rotational motions (pitch, yaw, and roll) around those axes.

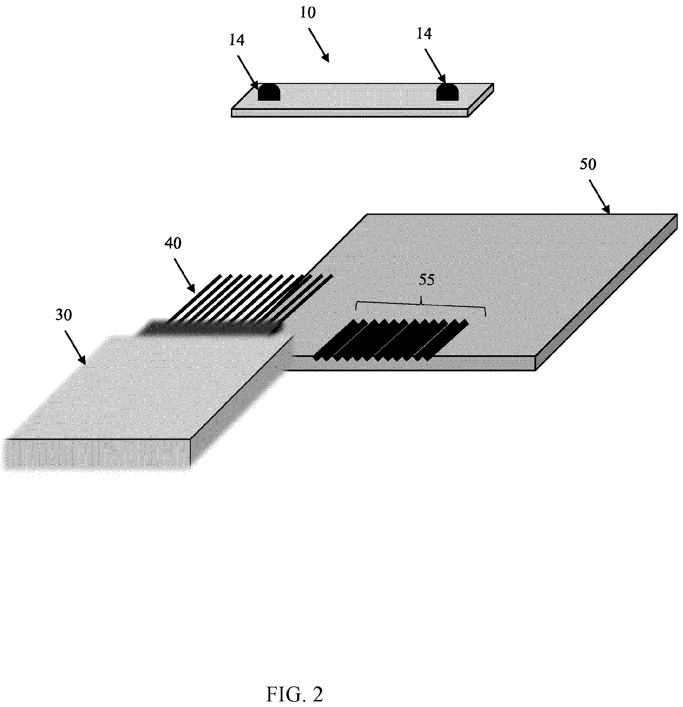

FIG. 2 shows an exploded view of the optical fiber positioning device 10, a fiber optical array 30 and a substrate 50, e.g., PIC. In embodiments, the fiber optical array 30 includes a plurality of fiber optics 40 which are placed and aligned within V-grooves 55 located on an upper surface of the substrate 50. In embodiments, the substrate 50 may be a PIC board, as an example. As discussed in more detail with respect to FIG. 3, for example, the fiber optics 40 of the fiber optic array 30 may be attached to the optical fiber positioning device 10 during the assembly process. The optical fiber positioning device 10 is then lowered onto the substrate 50 such that the individual fiber optics of the fiber optical array 30 are aligned within V-grooves 55 of the substrate 50. In embodiments, the alignment is along longitudinal, traverse and diagonal axes. The alignment can be accomplished by ensuring the alignment mark 16 is perfectly centered within the alignment mark 18.

FIG. 3 shows the optical fiber positioning device 10 coupling the fiber optical array 40 to the substrate 50 in accordance with aspects of the present disclosure. In this representation, the optical fiber positioning device 10 may be attached to a pick and place tool 100 and, more specifically attached to a push-pin 110 of the pick and place tool 100. The pick and place tool 100 may be any conventional tool known to those of skill in the art.

For example, the optical fiber positioning device 10 may be secured to the push-pin 110 by a vacuum device or by another known method. Also, the optical fiber positioning device 10 may be secured to the substrate 50 by UV-curable glue, for example, to confine the fiber optical array 30 in an optimal position. The push-pin 110 of the pick and place tool 100 can be adjusted in six independent axes of motion (e.g., different angles). The pick and place tool 100 may also include one or more cameras 105, which may be used to take a picture of the positioning marks 16, 18.

In operation, the camera 105 will take pictures during the alignment process of the fiber optical array 30. In this way, the camera 105 can provide active feedback for parallelism between multi-channel fiber array in the V-grooves and a waveguide in a PIC. By way of example, the push-pin 110 of the pick and place tool 100 may be adjusted in any of the six independent axes of motion. During this adjustment process, the camera 105 may take pictures of the positioning marks 16, 18 to determine their relative position. For example, as the push-pin 110 of the pick and place tool 100 is adjusted in any of the six independent axes of motion, the camera will take a picture of the positioning marks 16, 18 in different positions relative to one another as shown in FIGS. 4A-7D. Once the positioning marks 16, 18 are determined to be in perfect concentric alignment, the technician can be also assured that the fiber optical array 30 will be in perfect parallelism with the V-grooves 55 of the substrate 50.

FIGS. 4-7D show positioning marks 16, 18 of the optical fiber positioning device 10 representing different positions of the fiber optic array 30 within grooves 55 of the substrate 50 in accordance with aspects of the present disclosure. More specifically, FIGS. 4-7D represent different relationships of the alignment marks 16, 18 to determine parallelism of the fiber optic array 30 within grooves 55 of the substrate 50. It should be understood that the grid pattern shown in the dome shaped indicators 14 of these figures are representative of the magnification of the positioning marks 16, 18. In this way, the optical fiber positioning device 10 enhances sensitivity for machine vision and tilted angle correction of the fiber optical array 30.

In understanding FIGS. 4-7D, it will become apparent to those of skill in the art that FIG. 4 represents perfect parallelism; whereas FIGS. 5A-7D represent a misalignment of the fiber optic array 30 within grooves 55 of the substrate 50. For example, in FIG. 4, the positioning marks 16, 18 are perfectly concentrically positioned with respect to one another indicating an alignment of the fiber optic array 30 in all of the different axes. In contrast, in FIGS. 5A-7D, the positioning marks 16, 18 are not concentrically positioned with respect to one another indicating a misalignment of the fiber optic array 30 along different axes.

In FIG. 4A, the positioning marks 16, 18 are perfectly positioned concentrically thereby representing that fiber optic array 30 within grooves 55 of the substrate 50 are in perfect parallelism.

In FIGS. 5A and 5B, the positioning marks 16, 18 are not concentrically positioned indicating a misalignment of the fiber optic array 30 along a transversal direction. For example, in FIG. 5A, the positioning mark 16 is centered in a left-right direction and is closer to a top portion of the positioning mark 18 indicating that the fiber optic array 30 is misaligned in a downward transversal direction. On the other hand, in FIG. 5B, the positioning mark 16 is centered in a left-right direction and is closer to a bottom portion of the positioning mark 18 indicating that the fiber optic array 30 is misaligned in an upward transversal direction.

In FIGS. 6A and 6B, the positioning marks 16, 18 are not concentrically positioned indicating a misalignment of the fiber optic array 30 along a longitudinal direction. For example, in FIG. 6A, the positioning mark 16 is centered in an upper-lower direction and is closer to a right side portion of the positioning mark 18 indicating that the fiber optic array 30 is misaligned in a leftward longitudinal direction. On the other hand, in FIG. 6B, the positioning mark 16 is centered in an upper-lower direction and is closer to a left side portion of the positioning mark 18 indicating that the fiber optic array 30 is misaligned in a rightward longitudinal direction.

In FIGS. 7A-7D, the positioning marks 16, 18 are not concentrically positioned indicating a misalignment of the fiber optic array 30 along a diagonal direction (e.g., rotational motions of pitch, yaw, and roll). For example, in FIG. 7A, the positioning mark 16 is closer to an upper left side portion of the positioning mark 18 indicating that the fiber optic array 30 is misaligned in a lower right diagonal direction. In FIG. 7B, the positioning mark 16 is closer to an upper right side portion of the positioning mark 18 indicating that the fiber optic array 30 is misaligned in a lower left diagonal direction. In FIG. 7C, the positioning mark 16 is closer to a lower left side portion of the positioning mark 18 indicating that the fiber optic array 30 is misaligned in an upper right diagonal direction. In FIG. 7D, the positioning mark 16 is close to a lower right side portion of the positioning mark 18 indicating that the fiber optic array 30 is misaligned in an upper left diagonal direction.

The optical fiber positioning device 10 can be utilized to fabricate integrated circuits in system on chip (SoC) technology. The SoC is an integrated circuit (also known as a "chip") that integrates all components of an electronic system on a single chip or substrate. As the components are integrated on a single substrate, SoCs consume much less power and take up much less area than multi-chip designs with equivalent functionality. Because of this, SoCs are becoming the dominant force in the mobile computing (such as in Smartphones) and edge computing markets. SoC is also used in embedded systems and the Internet of Things.

The method(s) and tool as described above are used in the fabrication of integrated circuit chips. The resulting integrated circuit chips can be distributed by the fabricator in raw wafer form (that is, as a single wafer that has multiple unpackaged chips), as a bare die, or in a packaged form. In the latter case the chip is mounted in a single chip package (such as a plastic carrier, with leads that are affixed to a motherboard or other higher level carrier) or in a multichip package (such as a ceramic carrier that has either or both surface interconnections or buried interconnections). In any case the chip is then integrated with other chips, discrete circuit elements, and/or other signal processing devices as part of either (a) an intermediate product, such as a motherboard, or (b) an end product. The end product can be any product that includes integrated circuit chips, ranging from toys and other low-end applications to advanced computer products having a display, a keyboard or other input device, and a central processor.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A structure comprising:
a body comprising a first end and a second end;
a dome shaped indicator provided on the body;
a first positioning mark associated with the dome shaped indicator; and
a second positioning mark under the first positioning mark and associated with the dome shaped indicator.

2. The structure of claim 1, wherein the body and the dome shaped indicator comprise transparent material, and, optionally, wherein the transparent material comprises one of glass, plastic and polymer.

3. The structure of claim 1 or claim 2, wherein the dome shaped indicator comprises a convex surface.

4. The structure of claim 3, wherein the dome shaped indicator is circular shaped or wherein the dome shaped indicator is polygon shaped.

5. The structure of one of claims 1 to 4, wherein the first positioning mark is larger than the second positioning mark, and, optionally, wherein the second positioning mark is nested within confines of the first positioning mark.

6. The structure of one of claims 1 to 5, wherein the first positioning mark and the second positioning mark are concentric when a fiber optic array is in perfect parallelism during an assembly of the fiber optic array to a waveguide of a photonic integrated circuit.

7. The structure of one of claims 1 to 6, wherein the dome shaped indicator comprises a magnification.

8. The structure of one of claims 1 to 7, further comprising a second dome shaped indicator on a second end of the body and the dome shaped indicator on the first end of the body, the second dome shaped indicator comprising the first positioning mark and the second positioning mark, the second positioning mark being nested within confines of the first positioning mark.

9. A structure comprising:
a body comprising a first end and a second end and composed of a transparent material;
a first dome shaped indicator provided on the first end of the body;
a second dome shaped indicator provided on a second end of the body;
a first positioning mark associated with the first dome shaped indicator and the second dome shaped indicator; and
a second positioning mark under the first positioning mark of the first and second dome shaped indicators, the second positioning mark being smaller than the first positioning mark.

10. The structure of claim 9, wherein the body and the dome shaped indicators comprise a transparent material, and/or wherein the dome shaped indicators each comprise a magnification, and/or wherein the second positioning mark is nested within confines of the first positioning mark.

11. The structure of claim 9 or claim 10, wherein the first positioning mark and the second positioning mark are concentric when a fiber optic array is in perfect parallelism during an assembly of the fiber optic array to a waveguide of a photonic integrated circuit.

12. The structure of one of claims 9 to 11, wherein the first positioning mark and the second positioning mark are misaligned when a fiber optic array is in not in perfect parallelism during an assembly of the fiber optic array to a waveguide of a photonic integrated circuit.

13. A photonics assembly comprising:
a substrate comprising a plurality of grooves on an upper surface thereof;
a fiber optical array comprising a plurality of fiber optics placed within the grooves located on the upper surface of the substrate; and
an alignment tool over the plurality of fiber optics, the alignment tool comprising a body with a first dome shaped structure with upper and lower positioning marks and a second dome shaped structure with upper and lower positioning marks, the lower positioning marks being concentric with the upper position marks when the plurality of fiber optics are in alignment with a waveguide along six degrees of freedom.

14. The photonics assembly of claim 13, wherein the body, the first dome shaped structure and the second dome shaped structure comprise transparent material.

15. The photonics assembly of claim 13 or claim 14, wherein first dome shaped structure and the second dome shaped structure comprise a magnification lens, with the lower positioning marks nested within the upper positioning marks.
